## Europäisches Patentamt
## European Patent Office
## Office européen des brevets

(11) Veröffentlichungsnummer: **0 121 761**
**B1**

(12) **EUROPÄISCHE PATENTSCHRIFT**

(45) Veröffentlichungstag der Patentschrift:
17.09.86

(21) Anmeldenummer: **84102375.7**

(22) Anmeldetag: **06.03.84**

(51) Int. Cl.⁴: **A 22 C 11/02**

(54) **Maschine zum Abfüllen teigiger Medien, insbesondere Wurstbrät.**

(30) Priorität: **30.03.83 DE 3311567**

(43) Veröffentlichungstag der Anmeldung:
**17.10.84 Patentblatt 84/42**

(45) Bekanntmachung des Hinweises auf die Patenterteilung:
**17.09.86 Patentblatt 86/38**

(84) Benannte Vertragsstaaten:
**AT BE CH FR GB IT LI SE**

(56) Entgegenhaltungen:
**DE - A - 2 249 070**
**FR - A - 2 214 413**
**GB - A - 2 050 801**
**US - A - 3 545 038**
**US - A - 3 553 768**

(73) Patentinhaber: **Schnell, Karl, Mühlstrasse 28,
D-7065 Winterbach (DE)**

(72) Erfinder: **Schnell, Karl, Mühlstrasse 28,
D-7065 Winterbach (DE)**

(74) Vertreter: **Schmid, Berthold et al, Patentanwälte
Dipl.-Ing. B. Schmid Dr. Ing. G. Birn Dipl.-Phys. H.
Quarder Falbenhennenstrasse 17,
D-7000 Stuttgart 1 (DE)**

ACTORUM AG

**Beschreibung**

Die Erfindung bezieht sich auf eine Maschine zum Abfüllen teigiger Medien, insbesondere Wurstbrät, mittels einer Pumpe in eine Wursthülle, einen Darm oder dgl., die in geraffter Form auf ein Füllrohr aufgeschoben ist und von der ablaufenden Wurst durch einen Bremsring gezogen wird, welche Maschine eine Einrichtung aufweist, die beim Platzen der Wursthülle den Pumpenantrieb stillsetzt. Eine Maschine dieser Art ist durch die GB-A-2 050 801 bekanntgeworden. Wesentliches Element dieser Maschine ist eine um einen gewissen Betrag schwenkbar gelagerte Platte, an welcher der Bremsring gehalten ist. Durch den in der ablaufenden Wursthülle entstehenden Druck wird diese Platte in ihrer einen Endstellung gehalten. Mit Hilfe eines Pneumatikzylinders ist die Platte in Gegenrichtung belastet, jedoch kann sich dieser Druck erst dann auswirken, wenn der Druck in der ablaufenden Wursthülle abfällt, was beispielsweise beim Platzen des Darms oder beim Lösen eines Clips zur Zipfelbildung der Fall ist. Ein weiterer pneumatischer Arbeitszylinder gibt dann ein pneumatisches Signal ab, welches nach entsprechender Verstärkung den Pumpenantrieb der in das Füllrohr fördernden Pumpe stillsetzt und der Füllrohr sperrt. Diese Einrichtung ist sehr empfindlich und sie muss für jedes Füllgut und jede Darmhülle separat eingestellt werden. Dieses Einstellen erfolgt von Hand und muss sehr feinfühlig vorgenommen werden. Dies erfordert viel Geschick und einen nicht unbeträchtlichen Zeitaufwand. Es kommt noch hinzu, dass die Einrichtung wegen ihrer Empfindlichkeit auch bei ungleichmässiger Förderung der Pumpe, also Schwankungen des Fülldrucks, ansprechen kann. Des weiteren muss ein Abschalten beim Anfahren der Maschine bzw. beim Wechsel der Wursthülle durch eine Zeit-Verzögerungseinrichtung verhindert werden. Auch diese muss man auf das Füllgut abstimmen. Im übrigen erschwert diese Vorrichtung das Aufziehen der Wursthülle auf das Füllrohr.

Die Aufgabe der Erfindung besteht infolgedessen darin, eine Maschine gemäss dem Oberbegriff des Anspruchs 1 so weiterzubilden, dass eine Anpassung an das Füllgut bzw. eine entsprechende Justierung beim Übergang von einem Füllgut zu einem andersartigen entfällt und die Überwachungseinrichtung insgesamt robuster ist.

Zur Lösung dieser Aufgabe wird erfindungsgemäss vorgeschlagen, dass die Maschine gemäss dem Oberbegriff des Anspruchs 1 entsprechend dem kennzeichnenden Teil des ersten Anspruchs ausgebildet ist. Die an dem in Ablaufrichtung hinteren Ende des gerafften Darms oder dgl. angreifende Vorschubeinrichtung übernimmt zweierlei Aufgaben. Zum einen bewirkt sie, dass der geraffte Darm auf dem Füllrohr nicht auseinandergezogen wird, sondern bis zum Ablauf des letzten Restes gerafft bleibt. Darüber hinaus stellt sie aber auch ein Fühlorgan für die Ablaufbewegung des gerafften Darms oder dgl. (nachfolgend wird der Einfachheit halber nur noch von einem gerafften Darm gesprochen, ohne dass dies einschränkend verstanden werden darf) dar. Dieses Abfühlen der Ablaufbewegung des gerafften Darms hat eine geradlinige Bewegung der Vorschubeinrichtung zur Folge, die an geeigneter Stelle erfasst und in ein entsprechendes Signal umgesetzt werden kann. Unterbleibt diese geradlinige Bewegung, so entfällt auch das hieraus resultierende Signal. Der Wegfall des letzteren wird nun dazu ausgenutzt, den Pumpenantrieb unverzüglich stillzusetzen. Dies bedeutet, dass im Falle eines Platzens des gefüllten Darmstücks und des dadurch unterbleibenden Weitertransports des restlichen gerafften Darms die Pumpe unverzüglich stillgesetzt wird. Dadurch vermeidet man das Ausströmen des Wurstbräts ins Freie. Die Vorrichtung zur Überwachung der Vorschubbewegung der Vorschubeinrichtung steht mit einer Abschalteinrichtung für den Pumpenantrieb, vorzugsweise in elektrischer Verbindung, so dass bei stillstehender Vorschubbewegung der Vorschubeinrichtung ein Kommando zum Abschalten des Pumpenantriebs ohne Verzögerung weitergeleitet werden kann. Infolgedessen kann man mit Hilfe dieser Ausgestaltung der Abfüllmaschine das unerwünschte Austreten des Füllguts beim Platzen des Darms nahezu huntertprozentig vermeiden. Es treten allenfalls noch wenige Gramm des Füllguts aus.

Andererseits behindert diese Einrichtung das Aufziehen des gerafften Darms auf das Füllrohr nicht, so dass eine gegebenenfalls vorhandene Aufziehvorrichtung für geraffte Därme ohne Einschränkung weiterbenutzt werden kann. Auch die Einrichtung zur Zipfelbildung kann ohne Einschränkung wie bisher benutzt werden. Insbesondere ist die Verwendung einer mitbewegten Quetschvorrichtung zur Zipfelbildung nach wie vor möglich. Die Zipfelbildung erreicht man dabei durch Drehen des Füllrohrs. An der mitbewegten Quetschstelle wird der gefüllte ablaufende Wurststrang von der Quetschvorrichtung festgehalten.

In Weiterbildung der Erfindung wird vorgeschlagen, dass die Vorschubeinrichtung eine parallel zum Füllrohr verschiebbare, mit einem Antriebsmotor gekuppelte Schubstange aufweist, die an einem quer dazu verlaufenden Tragarm ein das Füllrohr wenigstens teilweise umfassendes, am hinteren Ende des gerafften Darms oder dgl. anliegendes Schubglied trägt, als solches ausgebildet oder damit gekuppelt ist. Dies ermöglicht ein einfaches, aber auch platzsparendes Vorschieben des gerafften Darms gegenden Bremsring hin und zugleich in einfacher Weise das Abfühlen dieser Vorschubbewegung. Dabei ist es besonders vorteilhaft, wenn das Schubglied aus einem auf das Füllrohr aufgeschobenen, insbesondere geschlossenen Ring besteht, mit dem der Tragarm gekuppelt oder in Arbeitsstellung kuppelbar ist. Dieser Ring kann, falls er nicht längsgeschlitzt ist und somit in Querrichtung auf das Wurstfüllrohr aufgesetzt werden kann, von der Mündung her auf das Füllrohr aufgeschoben werden. Nachfolgend zieht man dann den gerafften Darm auf. Soweit der Ring nicht ständig mit dem Schubglied verbunden ist, wird er nach dem Aufschieben auf das Füllrohr damit gekuppelt. Das Kuppeln kann beispielsweise in der Art erfolgen, dass der Tragarm mit Hilfe des Antriebsmotors der Vorschubeinrichtung an einen Anschlag, insbesondere einen umlaufenden Bund angelegt wird.

Eine besonders bevorzugte Ausführungsform der Erfindung besteht darin, dass der Antriebsmotor ein Motor mit linearer Antriebsbewegung, insbesondere ein hydraulischer oder pneumatischer Arbeitszylinder ist. Er zeichnet sich durch geringen Platzbedarf, einfache und robuste Bauweise sowie geringe Kosten aus. Pressluft ist bei derartigen Maschinen in der Regel immer zur Verfügung, weswegen sich in erster Linie die Verwendung eines pneumatischen Arbeitszylinders empfiehlt. Zumindest weil verschiedene geraffte Därme bei ein und derselben Maschine Verwendung finden, ist es zweckmässig, die Kolbenkraft einstellbar zu machen.

In weiterer Ausgestaltung der Erfindung wird vorgeschlagen, dass die Vorrichtung zur Überwachung der Vorschubbewegung der Vorschubeinrichtung im wesentlichen aus einem von der Vorschubeinrichtung angetriebenen Impulsgeber besteht, der mit einem Impulszähler oder dgl. in der insbesondere elektronischen Antriebssteuerung verbunden ist. Letztere ist in bevorzugter Weise eine zentrale Steuerung für die gesamte Maschine, welche all ihre Antriebe steuert, im Falle der eingangs erwähnten Maschine also sowohl den Antrieb der Pumpe und des Füllrohrs als auch einer Quetschvorrichtung und gegebenenfalls einer Aufziehvorrichtung. Mit verhältnismässig geringem Aufwand kann hier noch ein Impulszähler integriert werden, der den Pumpenmotor dann abschaltet, wenn keine Impulse mehr ankommen. Es ist zweifellos vorteilhaft, wenn zugleich auch andere Aggregate und Vorrichtungen, wie beispielsweise die Quetschvorrichtung, abgeschaltet und insbesondere auch eine Störmeldung gegeben wird. Der Impulszähler gibt vorteilhafterweise direkt elektrische Impulse ab.

Es ist ohne weiteres möglich, das Abschalten auch dann zu bewirken, wenn bei einem normalerweise in konstanten Zeitabständen Impulse abgegebenen Impulsgeber die Impulse am Impulszähler unregelmässig ankommen. In Weiterbildung der Erfindung wird vorgeschlagen, dass die Vorrichtung zur Bewegungsumsetzung ein über wenigstens zwei Umlenkrollen oder dgl. geführtes Endlosglied ist, das über ein Kupplungselement mit der Schubstange verbunden ist, wobei eine der Umlenkrollen mit dem Impulsgeber antriebsverbunden, insbesondere koaxial dazu angeordnet ist und sich das Endlosglied parallel zur Schubstange erstreckt. Letzteres bedeutet selbstverständlich, dass die geraden Trumme des Endlosglieds parallel zur Schubstange verlaufen. Im übrigen muss das Kupplungsglied nicht notwendigerweise direkt an der Schubstange angreifen, vielmehr ist auch das Kuppeln an dererer Stelle möglich, beispielsweise an der Verbindungstelle von Schubstange und Kolbenstange oder am äusseren Ende der letzteren. In bevorzugter Weise ist das Endlosglied eine Endloskette, und dabei sind die Umlenkglieder als Kettenräder ausgebildet.

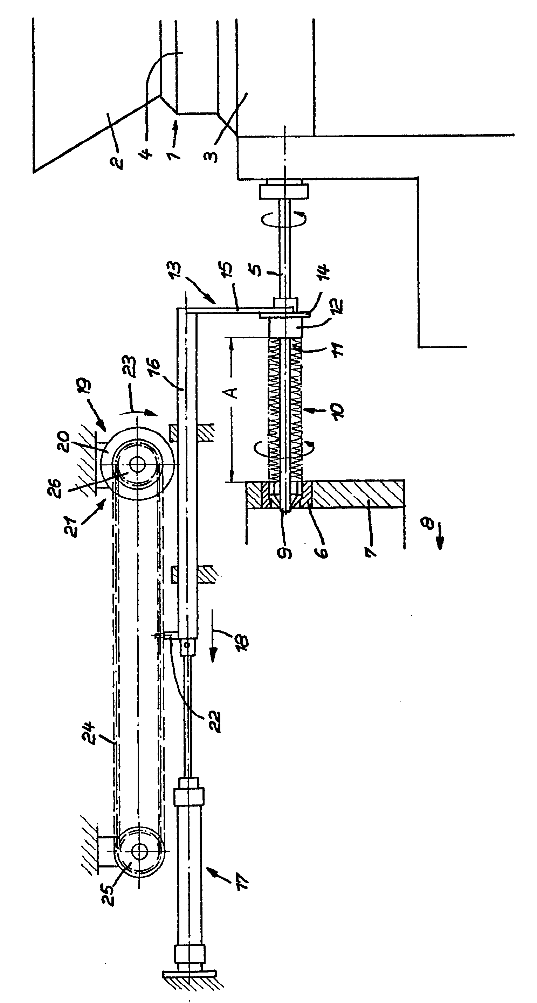

Die Erfindung wird nachstehend anhand eines Ausführungsbeispiels näher erläutert. Dieses ist in der Zeichnung schematisch und in Seitenansicht gezeigt.

Die Maschine zum Abfüllen teigiger Medien, insbesondere von Wurstbrät, weist eine Füllvorrichtung 1 mit einem Einfülltrichter 2 sowie eine Förderpumpe 3 auf. In den Trichter 2 werden in dem nachfolgend betrachteten Falle der Wurstherstellung von Hand und/ oder mittels einer Beschickungsvorrichtung Fleisch, Gewürze und dgl. eingefüllt. Nach einer Vor- und gegebenenfalls auch Feinzerkleinerung in einer Zerkleinerungsvorrichtung 4 bekannter Bauart gelangt das so hergestellte Wurstbrät in die Förderpumpe 3. Sie ist ebenfalls von bekannter Konstruktion. Vorzugsweise handelt es sich um eine Zahnrad-Förderpumpe mit einem innen verzahnten Aussenrand und einem damit kämmenden, angetriebenen, exzentrisch gelagerten, aussen verzahnten Innenrad. An den Pumpenauslass schliesst sich unmittelbar ein drehbar gelagertes, antreibbares Füllrohr 5 an. Dieses durchsetzt einen Bremsring 6 und gegebenenfalls auch noch einen Darmraffring. Weil das Füllrohr gedreht wird, ist auch der Bremsring 6 im gleichen Drehsinne und mit gleicher Umdrehungszahl antreibbar. Der den Bremsring aufnehmende Maschinenteil 7 ist im Sinne des Pfeils 8 verschiebbar, wodurch das freie Ende bzw. die Mündung 9 des Füllrohrs 5 freikommen kann. Im Bedarfsfalle kann man dieses Maschinenteil senkrecht zur Bildebene verschwenkbar ausbilden, damit das freie Ende des Füllrohrs 5 noch besser zugänglich wird. Auf dieses Füllrohr schiebt man den gerafften Darm 10 entgegen dem Pfeil 8 auf. Nachfolgend steckt man das Wurstfüllrohr wieder in den Brems- und gegebenenfalls Darmraffring. Dabei steht dann der «Anfang» des gerafften Darms über die Mündung 9 des Füllrohrs 5 über. Wenn dieses Ende verschlossen ist und die Pumpe Brät fördert, so füllt sich der Darm, und das Füllgut zieht ihn durch den Spaltraum zwischen dem Bremsring und dem Füllrohr 5 hindurch. Dadurch entsteht eine an sich endlose, der Gesamtlänge des gerafften Darms 10 entsprechende Wurst. Diese wird mit Hilfe einer geeigneten Vorrichtung zur Zipfelbildung in einzelne Würste unterteilt. Zweckmässigerweise handelt es sich um eine Quetschvorrichtung mit umlaufenden Quetschplattenpaaren, deren Vorschubgeschwindigkeit genau der Vorschubgeschwindigkeit der entstehenden, ablaufenden Wurst ist. Wenn letztere an einer vorbestimmten Stelle gequetscht wird, so kann sich nur noch der zwischen dieser Quetschstelle und der Mündung 9 befindliche Teil der Wurst weiterdrehen. Auf diese Weise entstehen an der Quetschstelle zwei Zipfel benachbarter Würste.

Dieses Quetschen erfolgt zwar kontinuierlich und allmählich, jedoch läuft das Wurstfüllen und Zipfelbilden mit vergleichsweise grosser Geschwindigkeit ab, so dass bei empfindlichen oder eventuell auch mit einem Fehler behafteten Wursthüllen bzw. Därmen es bei der Zipfelbildung durchaus auch zum Platzen der Wursthüllen kommen kann.

Ohne die erfindungsgemässe Ausbildung dieser Maschine würde sich nachfolgend das von der Pumpe weiterhin geförderte Wurstbrät über die Maschine und auf den Boden ergiessen.

Um dies zu verhindern, liegt am hinteren Ende 11 des gerafften Darms 10 ein Schubglied 12 einer Vorschubeinrichtung 13 an. Zweckmässigerweise hat es die Gestalt eines Rings mit einem Aussenbund 14. Er wird vor dem gerafften Darm auf das Füllrohr 5 aufgeschoben. Einerseits obliegt ihm die Aufgabe, den restlichen gerafften Darm gegen den Bremsring 6 hin zu verschliessen und auf Blocklage zu halten. Andererseits wirkt er als Fühlorgan für die Verschiebebewegung des gerafften Darms entlang dem Füllrohr 5 und damit für das kontinuierliche Abziehen des gerafften Darms vom Füllrohr. Bei einem Platzen des Darms unterbleibt dieses kontinuierliche Ablaufen und in diesem Falle bleibt dann das Schubglied 12 an der momentan erreichten Stelle stehen.

Weil das Schubglied 12 über einen Tragarm 15 mit einer Schubstange 16 der Vorschubeinrichtung verbunden ist und die Schubstange von einem Motor 17 im Sinne des Pfeils 18 verschoben wird, wenn die Pumpe läuft, unterbleibt bei stillstehendem Schubglied 12 auch diese Vorschubbewegung der Schubstange 16. Der Motor 17 ist jedenfalls nicht in der Lage, den gerafften Darm stärker zusammenzupressen. Demnach stellt also die Vorschubbewegung der Schubstange 16 ein Kriterium für den ordnungsgemässen Ablauf und das einwandfreie Füllen des ablaufenden Darms dar. Anders ausgedrückt kann man die plötzliche Unterbrechung dieser Vorschubbewegung zu einer Störmeldung und auch Abschaltung des Pumpenantriebs ausnutzen, weil sie im unmittelbaren Zusammenhang mit dem Platzen des Darms bei laufender Pumpe steht. Bei dem Motor 17 handelt es sich in bevorzugter Weise um einen pneumatischen Arbeitszylinder. Seine Kolbenkraft, also die Zugkraft, mit der er die Schubstange 16 in Pfeilrichtung 18 verschiebt, ist in bevorzugter Weise einstellbar.

Zu einer Überwachungsvorrichtung für die Vorschubbewegung der Vorschubeinrichtung 13 und damit auch das ordnungsgemässe Ablaufen des gefüllten Darms gehört ein drehbarer Impulsgeber 20. Er wird von einer Bewegungsumsetzvorrichtung 21 angetrieben, die über ein Kupplungselement 22 mit der Vorschubeinrichtung 13, insbesondere deren Schubstange 16 gekuppelt ist. Sie übersetzt die lineare Vorschubbewegung in Richtung des Pfeils 18 in eine Drehbewegung des Impulsgebers 20 im Sinne des Pfeils 23. Ihre wesentlichen Elemente sind ein Endlosglied 24, insbesondere eine Endloskette, die über wenigstens zwei Umlenkrollen 25 und 26 bzw. Kettenräder geführt ist. Die Länge eines Trumms dieses Endlosglieds entspricht wenigstens der Länge der Arbeitsbewegung des Motors 17. Ausserdem erstreckt sich jedes Trumm parallel zur Kolbenachse des Motors 17 bzw. zur Längsachse des Füllrohrs 5.

Solange der Impulsgeber 20 mit konstanter Drehzahl umläuft, gibt er in gleichmässigen Abständen Impulse ab, die von einem nicht gezeigten Impulszähler empfangen werden. Wenn die Impulse wegfallen oder der zeitliche Abstand zwischen zwei Impulsen verändert, insbesondere grösser ist, so öffnet der Impulszähler über die elektronische Steuerung dieser Maschine den Stromkreis, zumindest zum Pumpenantriebsmotor.

**Patentansprüche**

1. Maschine zum Abfüllen teigiger Medien, insbesondere Wurstbrät, mittels einer Pumpe (3) in eine Wursthülle, einen Darm oder dgl., die in geraffter Form (10) auf ein Füllrohr (5) aufgeschoben ist und von der ablaufenden Wurst durch einen Bremsring (6) gezogen wird, welche Maschine eine Einrichtung aufweist, die beim Platzen der Wursthülle den Pumpenantrieb stillsetzt, dadurch gekennzeichnet, dass diese Einrichtung eine angetriebene, am hinteren Ende (11) des gerafften Darms (10) oder dgl. angreifende Vorschubeinrichtung (13) für den gerafften Darm oder dgl. aufweist, die mit einer Vorrichtung zur Überwachung der Vorschubbewegung verbunden ist, wobei die Überwachungsvorrichtung (19) mit einer Abschaltvorrichtung für den Pumpenantrieb in Verbindung ist und der stillstehenden Vorschubbewegung der Vorschubeinrichtung die Abschaltstellung des Pumpenantriebs zugeordnet ist.

2. Maschine nach Anspruch 1, dadurch gekennzeichnet, dass die Vorschubeinrichtung (13) eine parallel zum Füllrohr (5) verschiebbare, mit einem Antriebsmotor (17) gekuppelte Schubstange (16) aufweist, die an einem quer dazu verlaufenden Tragarm (15) ein das Füllrohr (5) wenigstens teilweise umfassendes, am hinteren Ende (11) des gerafften Darms (10) oder dgl. anliegendes Schubglied (12) trägt, als solches ausgebildet oder damit gekuppelt ist.

3. Maschine nach Anspruch 2, dadurch gekennzeichnet, dass das Schubglied (12) aus einem auf das Füllrohr (5) aufgeschobenen, insbesondere geschlossenen Ring besteht, mit dem der Tragarm (15) gekuppelt oder in Arbeitsstellung kuppelbar ist.

4. Maschine nach Anspruch 2 oder 3, dadurch gekennzeichnet, dass der Antriebsmotor (17) ein Motor mit linearer Antriebsbewegung, insbesondere ein hydraulischer oder pneumatischer Arbeitszylinder ist.

5. Maschine nach wenigstens einem der vorhergehenden Ansprüche, dadurch gekennzeichnet, dass die Vorrichtung (19) zur Überwachung der Vorschubbewegung der Vorschubeinrichtung (13) im wesentlichen aus einem von der Vorschubeinrichtung angetriebenen Impulsgeber (20) besteht, der mit einem Impulszähler oder dgl. in der elektronischen Antriebssteuerung verbunden ist.

6. Maschine nach Anspruch 5, dadurch gekennzeichnet, dass der Impulsgeber (20) drehbar und über eine Vorrichtung (21) zur Bewegungsumsetzung der Schubstange (16) der Vorschubeinrichtung (13) gekuppelt ist.

7. Maschine nach Anspruch 6, dadurch gekennzeichnet, dass die Vorrichtung (21) zur Bewegungsumsetzung ein über wenigstens zwei Umlenkrollen (25, 26) oder dgl. geführtes Endlosglied (24) ist, das über ein Kupplungselement (23) mit der Schubstange (16) verbunden ist, wobei eine (26) der Umlenkrollen mit dem Impulsgeber (20) antriebsverbunden, insbesondere koaxial dazu angeordnet ist und sich das Endlosglied (24) parallel zur Schubstange (16) erstreckt.

8. Maschine nach Anspruch 7, dadurch gekennzeichnet, dass das Endlosglied (24) eine Endloskette ist und die Umlenkräder (25, 26) Kettenräder sind.

**Claims**

1. Machine for filling pasty media, particularly sausage mixture, by means of a pump (3) into a sausage casing, an intestine or the like, which is pushed in taut form (10) onto a filling pipe (5) and is pulled by the discharging sausage through a braking ring (6), the said machine having an apparatus which immobilises the pump drive if the sausage casing should burst, characterised in that this apparatus has, engaging the rear end (11) of the taut intestine (10) or the like a driven feed means (13) for the taut intestine or the like which is connected to an apparatus for monitoring the feed movement, the monitoring device (19) being connected to a device for switching off the pump drive, the switch-off position of the pump drive being associated with the immobilised forward feed movement of the feed means.

2. Machine according to Claim 1, characterised in that the feed means (13) comprises, displaceable parallel with the filling pipe (5) and coupled to a driving motor (17), a push rod (16) which carries on a transversely extending support arm (15) a push member (12) at least partially enclosing the filling pipe (5) and bearing on the rear end (11) of the taut intestine (10) or the like and which is constructed as or is coupled with the same.

3. Machine according to Claim 2, characterised in that the thrust member (12) consists of an in particular closed ring which is pushed onto the filling pipe (5) and with which the support arm (15) is or in the working position can be coupled.

4. Machine according to Claim 2 or 3, characterised in that the drive motor (17) is a motor with a linear drive movement and is in particular a hydraulic or pneumatic working cylinder.

5. Machine according to at least one of the preceding Claims, characterised in that the device (19) for monitoring the feed movement of the feed device (13) consists essentially of an impulse transmitter (20) driven by the feed means and which is coupled to a pulse counter or the like in the electronic drive control system.

6. Machine according to Claim 5, characterised in that the pulse transmitter (20) is coupled rotatably and through a device (21) for conversion of movement to the push rod (16) of the feed device (13).

7. Machine according to Claim 6, characterised in that the device (21) for movement conversion is an endless member (24) guided via at least two reversing rollers (25, 26) or the like and which can be connected via a coupling element (23) to the push rod (16), a (26) reversing roller being connected to the pulse transmitter (20) in a driving relationship and in particular coaxially therewith, the endless member (24) extending parallel with the push rod (16).

8. Machine according to Claim 7, characterised in that the endless member (24) is an endless chain while the reversing wheels (25, 26) are chain wheels.

**Revendications**

1. Machine pour le bourrage de produits pâteux, en particulier de chair à saucisse, à l'aide d'une pompe (3), dans une enveloppe de saucisse, d'un boyau ou élément analogue qui a été enfilé sous forme retroussée (10) sur un tube de remplissage (5) et qui est tiré par la saucisse qui part, au moyen d'une bague de freinage (6), cette machine possédant un dispositif qui immobilise le dispositif d'entraînement de la pompe lors d'un éclatement de l'enveloppe de la saucisse, caractérisée en ce que ce dispositif comporte, pour le boyau retroussé ou élément analogue, un dispositif (13) entraîné, d'avancement, saisissant l'extrémité arrière (11) du boyau retroussé (10) ou de l'élément analogue, lequel dispositif est relié à un dispositif de surveillance du mouvement d'avancement, où le dispositif de surveillance (19) est relié à un dispositif de débranchement des moyens d'entraînement de la pompe, et en ce qu'à l'immobilisation du mouvement d'avancement du dispositif d'avancement est associée la position de débranchement des moyens d'entraînement de la pompe.

2. Machine suivant la revendication 1, caractérisée en ce que le dispositif d'avancement (13) comporte une tige de translation (16), mobile parallèlement au tube de remplissage (5) et accouplée à un moteur d'entraînement (17), cette tige portant, sur un bras porteur (15) qui s'étend transversalement par rapport à elle, un organe de translation (12) s'appliquant à l'extrémité arrière (11) du boyau retroussé (10), entourant au moins partiellement le tube de remplissage (5), cet organe de translation (12) étant formé comme tel ou étant accouplé au bras.

3. Machine suivant la revendication 2, caractérisée en ce que l'organe de translation (12) est constitué d'une bague, en particulier fermée, enfilée sur le tube de remplissage (5), cette bague étant accouplée ou étant accouplable en position de travail au bras porteur (15).

4. Machine suivant la revendication 2 ou 3, caractérisée en ce que le moteur d'entraînement (17) est un moteur à mouvement d'entraînement linéaire, en particulier un cylindre de travail hydraulique ou pneumatique.

5. Machine suivant au moins l'une des revendications précédentes, caractérisée en ce que le dispositif (19) de surveillance du mouvement d'avancement du dispositif d'avancement (13) consiste en principe en un générateur d'impulsions (20) entraîné par le dispositif d'avancement, ce générateur étant relié à un compteur d'impulsions ou dispositif analogue dans la commande d'entraînement électronique.

6. Machine suivant la revendication 5, caractérisée en ce que le générateur d'impulsions (20) est susceptible de tourner et est accouplé, par un dispositif (21) pour changer le sens de marche, à la tige de translation (16) du dispositif d'avancement (13).

7. Machine suivant la revendication 6, caractérisée en ce que le dispositif (21) pour le changement de marche est un organe sans fin (24) passant sur au moins deux poulies de renvoi (25, 26) ou organes analogues, cet organe (24) étant relié par un dispositif d'accouplement (23) à la tige de translation (16), où l'une (26) des poulies de renvoi est reliée pour entraînement, en particulier est montée coaxialement sur lui, au générateur d'impulsions (20) et où l'organe sans fin (24) s'étend parallèlement à la tige de translation (16).

8. Machine suivant la revendication 7, caractérisée en ce que l'organe sans fin (24) est une chaîne sans fin et en ce que les poulies de renvoi (25, 26) sont des roues à chaîne.